# EUROPÄISCHE PATENTANMELDUNG

(11) **EP 0 684 412 A1**
(43) Veröffentlichungstag der Anmeldung: **29.11.1995**
(21) Anmeldenummer: 95107571.2
(22) Anmeldetag: 17.05.1995
(51) Int. Cl.: F16J 15/34

(54) **Gleitringdichtungsanordnung**

(30) Priorität: 27.05.1994 DE 4418650
(71) Anmelder: FEODOR BURGMANN DICHTUNGSWERKE GmbH & Co., D-82515 Wolfratshausen (DE)
(72) Erfinder: Feigl, Peter, D-82335 Höhenrain (DE)
(74) Vertreter: Schmidt, Horst, Dr.

(57) **Zusammenfassung**

Eine Gleitringdichtungsanordnung zur Abdichtung einer Welle gegenüber einem Gehäuse umfasst einen drehunbeweglich in einer Gehäusebohrung (2) montierbaren Gleitring (5) und einen mittels eines Mitnehmergehäuses (11) mit der Welle zur gemeinsamen Drehung verknüpfbaren axial beweglichen Gleitring (7). Die Gleitringe (5,7) haben Dichtflächen (9,10), die durch eine auf den rotierenden Gleitring (7) wirkende Vorspannfeder (14) in Anlage miteinander vorgespannt sind. Aus einem achsparallelen Bereich (12) des Mitnehmergehäuses (11) ist eine Mitnehmerzunge (15) unter einem Winkel (a) abgebogen. Die Mitnehmerzunge (15) greift in eine entsprechend ausgerichtete Ausnehmung (16) im rotierenden Gleitring (7) mit Spiel ein, um die Drehkraft vom Mitnehmergehäuse (119 auf den Gleitring (7) zu übertragen. Zwischen dem Mitnehmergehäuse (11) und der Welle (4) kann eine drehkraftübertragende Steckverbindung vorgesehen sein.

## Beschreibung

Die Erfindung betrifft eine Gleitringdichtungsanordnung zur Abdichtung einer Welle gegenüber einem Gehäuse gemäss Oberbegriff des Patentanspruches 1.

Die Erfindung bezieht sich insbesondere auf eine Gleitringdichtungsanordnung für den Einsatz bei Aggregaten in einer Umgebung mit geringem Platzangebot, z.B. bei Klimageräten für Kraftfahrzeuge. Bei derartigen Anwendungen ist ferner das Erfordernis einer montage- und wartungsleichten Ein- und Ausbaumöglichkeit zu berücksichtigen. Gleichzeitig werden vergleichsweise hohe Anforderungen an die Belastbarkeit derartiger Gleitringdichtungsanordnungen im Hinblick auf die abzudichtenden Drücke gestellt, wobei in diesem Zusammenhang der Notwendigkeit, umweltverträgliche Kältemittel, wie C0₂, zu verwenden, Rechnung getragen werden muss.

Der Erfindung liegt damzufolge die Aufgabe zugrunde, eine Gleitringdichtungsanordnung der eingangs erwähnten Gattung zu schaffen, die bei fertigungsgünstigem Aufbau den erwähnten Anforderungen gerecht wird.

Diese Aufgabe wird erfindungsgemäss durch die Merkmale im kennzeichnenden Teil des Patentanspruches 1 gelöst. Danach umfasst die Mitnehmeranordnung, die vorzugsweise nach Art eines napfförmigen Gehäuses ausgebildet ist, wenigstens ein sich axial unter einem Winkel zur Wellenachse erstreckendes und in eine entsprechend ausgerichtete Ausnehmung im rotierenden Gleitring mit Spiel eingreifendes Mitnehmerelement. Das Mitnehmerelement lässt sich gemäss einer bevorzugten Weiterbildung der Erfindung in besonders fertigungsgünstiger Weise dadurch realisieren, dass es eine aus einem achsparallelen Bereich des Mitnehmergehäuses abgewinkelte Mitnehmerzunge darstellt. Dabei kann gemäss einer anderen Weiterbildung der Erfindung der rotierende Gleitring im wesentlichen in dem Mitnehmergehäuse aufgenommen sein. Dadurch können das Mitnehmergehäuse, der rotierende Gleitring, eine Vorspanneinrichtung und weitere Bauteile zu einer montagefertigen Baueinheit zusammengefasst werden, da der Gleitring aufgrund der unter einem Winkel sich erstreckenden Mitnehmerzunge an einem Herausfallen aus dem Mitnehmergehäuse wirksam gehindert ist. Die ansonsten vorzunehmenden vorbereitenden Montagearbeiten entfallen damit. Darüber hinaus wurde festgestellt, dass eine entsprechend der abgewinkelten Mitnehmerzunge verlaufende Ausnehmung oder Nut im rotierenden Gleitring auch im Hinblick auf dessen Bruchfestigkeit Vorteile gegenüber einer achsparallelen Ausrichtung einer Mitnehmernut für radiale Mitnehmerstifte hat, wie sie bei bekannten Gleitringdichtungsanordnungen vorgesehen sind. Achsparallele Nuten schaffen u.a. radiale Anschlagflächen, die scharfe Querschnittsübergänge ergeben, welche bei der bevorzugten Verwendung von verschleissfestem, kerbempfindlichen Hartmaterial, wie Wolframkarbit, die Belastbarkeit der Gleitringe entsprechend herabsetzen. Die bei der erfindungsgemässen Gleitringdichtungsanordnung vorgesehene Nut oder Ausnehmung kommt ohne derartige scharfe Querschnittsübergänge aus, was wegen der höheren Belastbarkeit der Dichtung zu einer Minimierung der baulichen Abmessungen beiträgt und/oder eine längere Lebensdauer erwarten läst. Bezüglich anderer Weiterbildungen der Erfindung wird auf die Unteransprüche verwiesen.

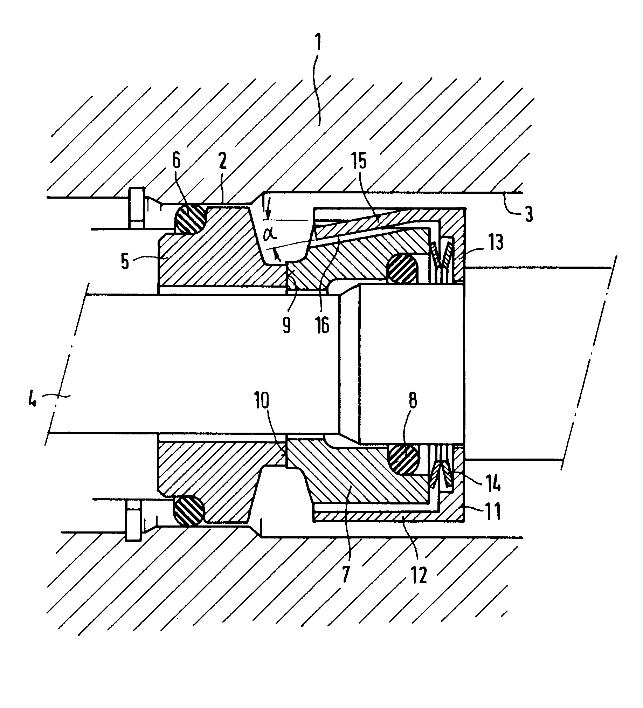

Die Erfindung wird nachfolgend anhand einer Ausführungsform und der Zeichnung näher erläutert. Die Zeichnung zeigt in längsgeschnittener Ansicht eine erfindungsgemäss aufgebaute Gleitringdichtungsanordnung im Zustand ihrer Montage in einer Gehäusebohrung.

Die Gleitringdichtungsanordnung nach der Erfindung umfasst, wie dargestellt, einen ersten Gleitring 5, der in nicht näher gezeigter Weise drehunbeweglich in einem Bereich 2 mit verringertem Durchmesser einer Bohrung 3 in einem Gehäuse 1 gehalten und gegenüber dem Bohrungsbereich 2 durch eine geeignete Dichtungseinrichtung, z.B. einen O-Ring 6, abgedichtet ist. Mit dem drehunbeweglichen Gleitring 5 wirkt ein weiterer Gleitring 7 zusammen, der durch eine nachfolgend näher beschriebene, Mitnehmeranordnung in Gestalt eines Mitnehmergehäuses 11 mit der Welle 4 verknüpft ist, so dass sich der Gleitring 7 zusammen mit der Welle 4 dreht. Der Gleitring 7 ist andererseits gegenüber der Welle 4 axial beweglich. Eine Dichtungseinrichtung, z.B. in Gestalt eines O-Ringes 8, ist vorgesehen, um den Gleitring 7 gegenüber der Welle 4 abzudichten.

Die Gleitringe 5, 7 haben gegenüberliegende, im wesentlichen radiale Dichtflächen 9, 10, die unter einer auf den rotierenden Gleitring 7 mittels einer Vorspanneinrichtung 14 ausgeübten Vorspannkraft in Anlage miteinander vorgespannt sind. Obschon andere Arten von Vorspanneinrichtungen vorgesehen werden können, ist bei der gezeigten Ausführungsform der Erfindung eine Tellerfeder 14 zwischen dem Mitnehmergehäuse 11 und dem rotierenden Gleitring 7 angeordnet.

Die Mitnehmeranordnung umfasst, wie erwähnt, bei der bevorzugten Ausführungsform der Erfindung ein im wesentliches napfförmiges Gehäuse 11 mit einem achsparallelen Wandbereich 12 und einem radialen oder Abschlusswandbereich 13. Im Mitnehmergehäuse 11 kann der rotierende Gleitring 7 im wesentlichen aufgenommen sein. Die Tellerfeder 14 stützt sich mit einem Ende an der Innenseite des Abschlusswandbereiches 13 und am anderen Ende am rotierenden Gleitring 7 ab.

Das Mitnehmergehäuse 11 ist mit der Welle 4 verbunden, so dass es sich gemeinsam mit der Welle 4 dreht. Zu diesem Zweck ist eine Wellendurchtrittsöffnung im Abschlusswandbereich 13 des Mitnehmergehäuses 11 mit einem nicht kreisrunden, sondern z.B. vieleckigen Querschnitt zum Zusammenwirken mit einem entsprechend konfigurierten Bereich der Welle 4 versehen, so dass zwischen der Welle 4 und dem Mitnehmergehäuse 11 eine formschlüssige Verbindung zustande kommt, wenn das Mitnehmergehäuse 11 auf die Welle 4 aufgeschoben bzw. aufgesteckt wird. Die Erfindung ist jedoch auf eine derartige Verbindung zwischen dem Mitnehmergehäuse 11 und der Welle 4 nicht beschränkt. Vielmehr könnte auch eine kraftschlüssige Verbindung oder eine Schraubanordnung vorgesehen sein.

Zur Übertragung der Drehkraft zwischen dem Mitnehmergehäuse 11 und dem Gleitring 7 ist erfindungsgemäss aus dem achsparallelen Bereich 12 des Mitnehmergehäuses 11 ein länglicher Streifen oder eine Mitnehmerzunge 15 so ausgeschnitten, dass nur eine endseitige Verbindung zum achsparallelen Bereich 12 verbelibt, und aus der achsparallelen Lage um einen geeigneten Winkel a in Richtung auf den Gleitring 7 abgebogen. Die Mitnehmerzunge 15 greift mit allseitigem Spiel in eine Ausnehmung oder Nut 16 ein, die vom äusseren Umfang des Gleitringes 7 aus in diesen eingebracht ist und einen Boden hat, der sich unter einem Winkel entsprechend dem Neigungswinkel der Mitnehmerzunge 15 ertreckt. Insbesondere kann die Nut oder Ausnehmung 16, wie dargestellt, so eingebracht werden, dass scharfe, z.B. unter einem rechten Winkel stehende Querschnittsübergänge zum umgebenden Material des Gleitringes 7 vermieden werden.

Wenn erwünscht, können auch mehrere umfänglich verteilte derartige Kombinationen aus Mitnehmerzungen 15 und Aufnahmenuten 16 vorgesehen sein.

Zur Montage wird der Gleitring 7 in das Mitnehmergehäuse 11 zusammen mit der Vorspanneinrichtung 14 und dem O-Ring 8 eingesetzt, wobei zu diesem Zeitpunkt die Mitnehmerzunge 15 noch in einer achsparallelen Ausrichtung steht. Nachdem durch Drehen des Gleitringes 7 die Ausnehmung oder Nut 16 in eine umfänglich ausgerichtete Lage zu der Mitnehmerzunge 15 gebracht worden ist, wird diese mittels eines geeigneten Werkzeuges um den Winkel a abgebogen, so dass sie in der Nut oder Ausnehmung 16 des Gleitringes 7 zu liegen kommt. Dadurch wird nicht nur die gewünschte Drehverbindung zwischen dem Mitnehmergehäuse 11 und dem Gleitring 7 geschaffen, sondern ferner auch der Gleitring 7 an einem Herausfallen aus dem Mitnehmergehäuse 11 gehindert, d.h. die Anordnung aus Mitnehmergehäuse 11, Gleitring 7, Vorspanneinrichtung 14 und O-Ring 8 wird auf diese Weise zu einer Baueinheit zusammengefasst.

Es wurde festgestellt, dass der Winkel a im Bereich von 5° bis 45° und vorzugsweise zwischen etwa 10° und 20° liegen sollte.

Obschon der rotierende Gleitring 7 aus anderen geeigneten Materialien bestehen kann, wird vorzugsweise hierfür ein verschleissfestes Hartmaterial, wie Wolframtkarbit vorgesehen. Die Nut oder Ausnehmung 16 kann in ein derartiges Material mittels dem Fachmann bekannter mechanischer Abtragverfahren, z.B. Erosionsverfahren, eingebracht werden.

Die Erfindung wurde vorausgehend anhand einer Ausführungsform beschrieben, bei der der rotierende Gleitring 7 im wesentlichen in dem Mitnehmergehäuse 11 aufgenommen ist. Es versteht sich jedoch, dass die Erfindung hierauf nicht beschränkt ist, sondern statt eines napfförmigen Mitnehmergehäuses auch eine Mitnehmeranordnung vorgesehen werden könnte, bei der z.B. von einer Endwand entsprechend dem Abschlusswandbereich 13 lediglich ein längliches Mitnehmerelement entsprechend der vorbeschriebenen Mitnehmerzunge 15 in der erwähnten Ausrichtung absteht.

Darauf hinzuweisen ist ferner, dass die äussere Abmessung des Mitnehmergehäuses 11 etwas kleiner als die Innenabmessung des durchmesserreduzierten Bereiches 2 der Gehäusebohrung 3 sein kann, so dass das Mitnehmergehäuse 11 durch den durchmesserreduzierten Bohrungsbereich 2 zur Montage der Gleitringdichtungsanordnung hindurchgeschoben werden kann.

## Patentansprüche

1. Gleitringdichtungsanordnung zur Abdichtung einer Welle gegenüber einem Gehäuse, bestehend aus einem drehunbeweglich montierbaren Gleitring und einem mittels einer Mitnehmeranordnung mit der Welle zur gemeinsamen Drehung verknüpfbaren axial beweglichen Gleitring, wobei die Gleitringe Dichtflächen haben, die durch eine auf den rotierenden Gleitring wirkende Vorspanneinrichtung in Anlage miteinander vorgespannt sind, dadurch gekennzeichnet, dass die Mitnehmeranordnung (11) wenigstens ein sich unter einem Winkel (a) gegenüber der achsparallelen Ausrichtung erstreckendes und in eine entsprechend ausgerichtete Ausnehmung (16) im rotierenden Gleitring (7) mit Spiel aufnehmbares Mitnehmerelement (15) umfasst.

2. Gleitringdichtungsanordnung nach Anspruch 1, dadurch gekennzeichnet, dass das Mitnehmerelement eine aus einem achsparallelen Bereich (12) eines Mitnehmergehäuses (11) abgewinkelte Mitnehmerzunge (15) ist.

3. Gleitringdichtungsanordnung nach Anspruch 1 oder 2, dadurch gekennzeichnet, dass der rotierende Gleitring (7) im wesentlichen in der Mitnehmeranordnung bzw. dem Mitnehmergehäuse (11) aufgenommen ist.

4. Gleitringdichtungsanordnung nach Anspruch 1, 2 oder 3, dadurch gekennzeichnet, dass die äussere Abmessung der Mitnehmeranordnung bzw. des Mitnehmergehäuses (11) kleiner als die Abmessung einer Gehäusebohrung (2) ist, in der die Dichtungsanordnung montierbar ist.

5. Gleitringdichtungsanordnung nach einem der vorhergehenden Ansprüche, dadurch gekennzeichnet, dass der rotierende Gleitring (7) aus einem verschleissfesten Hartmaterial besteht.

6. Gleitringdichtungsanordnung nach einem der vorhergehenden Ansprüche, dadurch gekennzeichnet, dass zwischen der Mitnehmeranordnung bzw. dem Mitnehmergehäuse (11) und der Welle eine formschlüssige Steckverbindung vorgesehen ist.

7. Gleitringdichtungsanordnung nach einem der vorhergehenden Ansprüche, dadurch gekennzeichnet, dass die Vorspanneinrichtung eine am rotierenden Gleitring (7) und der Mitnehmeranordnung bzw. dem Mitnehmergehäuse (11) abgestützte Tellerfederanordnung (14) umfasst.
